# EUROPEAN PATENT SPECIFICATION

(11) **EP 2 323 316 B1**
(45) Date of publication and mention of the grant of the patent: **06.02.2013**
(21) Application number: 09290863.1
(22) Date of filing: 16.11.2009
(51) Int. Cl.: H04L 12/70

(54) **Method and device for segmentation of data**
Verfahren und Vorrichtung zur Segmentierung von Daten
Procédé et dispositif pour la segmentation de données

(43) Date of publication of application: 18.05.2011
(73) Proprietor: Alcatel Lucent, 75007 Paris (FR)
(72) Inventor: de Schepper, Koen, 2650 Edegem (BE); van den Berghe, Steven, 9620 Zottegem (BE)
(74) Representative: Narmon, Gisèle Marie Thérèse

(56) References cited:
- WO-A2-2006/096823
- US-A1- 2009 046 744

## Description

The present invention relates to a method for segmentation of data to optimize transmission of these segmented data over a network between a transmitter and a client receiver.

Today video, that needs to be transmitted over a network, is often encoded using a constant bit rate, hereafter abbreviated by CBR, encoding scheme. It simplifies the transmission and scheduling mechanisms because of its predictive behavior. The content can be transmitted using a constant bit rate transmission scheme. A drawback of CBR encoding is that the user experience is not optimal due to large quality variations of the resulting video playback. An alternative solution involves encoding using a variable bit rate, hereafter abbreviated by VBR, encoding or a constant quality encoding scheme. If such VBR or constant quality encoded video is to be transmitted using CBR transmission, buffers at the client receivers have to be large enough to compensate for all possible play out variations which can result from the irregular pattern in the received amount of data as a function of the time. In practice a longer time is needed to allow this buffer to sufficiently fill up, getting sufficient data for enabling the decoder to decode them for consecutive play out e.g. on a television screen . To decrease the variation of the difference between the time of receiving the content and the time of consuming the content for play out, and thus the time for filling the buffer sufficiently, a VBR encoded stream is often chunked in fixed time segments. While this solution ensures, that in the client receiver, the variation of the difference between receiving the content and consuming the content for play out, is kept within defined constraints, it seriously increases the overhead due to the large number of segments. This overhead is related to connection set-up, both in the transmitter and optionally also in intermediate caches within the transmission network, a connection set-up which is needed each time a new segment is to be transmitted.

W02006/096823 discloses a system and method for transmitting and presenting streaming digital information signals that optimizes performance in the context of goodput, throughput, delay, receiver buffer requirements and tolerance to loss and jitter. The method provides ordering packets of information based on a priority associated with each of the packets; managing the flow of the packets into and out of a buffer; adjusting the rate at which the packets are provided to a communication medium; and transmitting and retransmitting the packets as needed.

US2009/0046744 discloses a communication control apparatus including a packetizing unit configured to generate packets based on coded data; a calculating unit configured to calculate, based on at least one of information regarding the amount of code of the coded data, reception state information indicating a reception state of a reception device serving as a transmission destination to which the packets are to be transmitted, information regarding the effective speed of a communication line to be used for transmission of the packets, and information regarding an available capacity of a communication channel that can be ensured for communication of the packets, the number of packets to be continuously transmitted; and a transmitting unit configured to continuously transmit, via the communication line to the reception device, packets corresponding to the number of packets calculated by the calculating unit.

It is therefore an object of the present invention to set out an improved and simple method for segmentation of data with the aim to optimize the delivery of these large amounts of data of varying content, while still preserving the quality of the received data at the receiver, and leading to less signaling overhead during the transmission.

To this purpose the method includes the steps of dividing the data to be transmitted into segments characterized in that said segments are further determined by a piecewise linear approximation of a curve representing a cumulative number of bytes of data to be transmitted as a function of transmission time such that per segment at least one client parameter constraint is met.

Instead of performing segmentation using fixed length segments as a function of time, chunking or segmentation is now only performed when it is needed, where this need is reflected by taking into account at least one client parameter constraint. This solution will reduce the amount of segments to be transmitted, and as a result also the amount of signaling overhead associated with the segmentation. The method will thus preserve the quality constraints, but at a much lower signaling overhead cost.

The at least one client parameter can be taken into account for each client separately, or can be a fixed parameter for all client receivers coupled to said transmitter.

The first alternative may imply that the segmentation is done per client individually, or that multiple segmentations are prepared upfront, where the applicable one is selected per client. The other alternative will allow a single upfront segmentation of the content.

The client parameter constraint can relate to a maximum receiver buffer occupancy at the receiver.

Again, this parameter can be taken into account for each client separately, resulting in an optimized segmentation adapted to the size of the buffer per client. Alternatively this parameter can also be e.g. a minimum value for all maximum buffer occupancy parameters of all client buffers coupled to the transmitter, or just be a single fixed maximum buffer occupancy parameter.

Another aspect is that the client parameter constraint can relate to a maximum buffering delay parameter at said client receiver.

This results in an improved user quality as it directly influences the response delay parameter that a user experiences when starting the video play out after a user selection. This response delay includes different components, such as transmission delays of the network, response delays of the server, buffer buildup to guarantee continuous play out etc... By controlling the delay related to the buffer buildup, denoted by maximum buffering delay parameter at said client receiver, via the segmentation, the total response delay is improved.

The present invention relates as well to a segmentation device for performing the present method, and to an encoder, transmitter or network node incorporating such a segmentation device.

Further embodiments are set out in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means. It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein :
Fig. 1 shows a segmentation device coupled to a transmitter for providing the segmented data to a client receiver,
Fig. 2 illustrates a video transmission network including such a segmentation device, transmitter and receiver,
Fig. 3 shows a schematic representation of arrival curves of constant bit rate and variable bit rate encoded data at the receiver, using constant bit rate transmission,
Fig. 4 shows a schematic representation of a prior art variable bit rate delivery approximation for variable bit rate encoded data by the segmentation of the curve representing the total number of generated bits as a function of time in segments of a fixed length time interval,
Fig. 5 shows an illustration of an embodiment of the present method,
Figs. 6 and 7 illustrate a more detailed implementation of the method shown in Fig. 5,
Figs 8 and 9 describes in detail the steps performed for implementing the embodiment illustrated in Figs 6 and 7.

It is to be remarked that the following merely illustrates the principles of the invention. It will thus be appreciated that those skilled in the art will be able to devise various arrangements that, although not explicitly described or shown herein, embody the principles of the invention. All examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

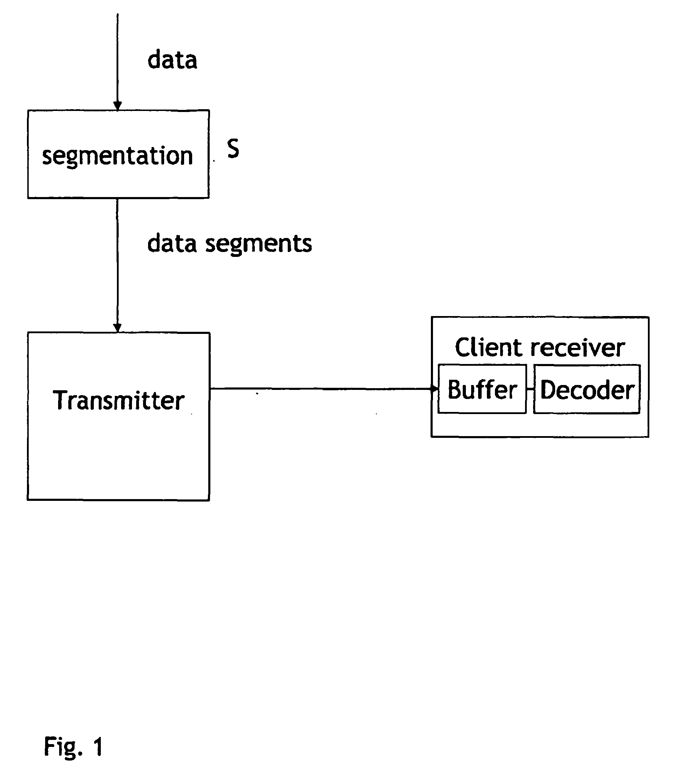

Fig. 1 shows a very schematic representation of a segmentation device adapted to perform embodiments of the present method. This segmentation device S is adapted to receive data to be segmented, and to provide the segmented data to a transmitter which will further transmit them to a client receiver. This client receiver generally comprises a buffer to temporarily store the received data, for then providing them to a data consuming device such as a decoder, which is adapted to use the received data for a certain application. In the case of video data this application is related to the decoding of the video.

In some embodiments the segmentation device S is part of the transmitter itself, and in other embodiments the segmentation device S can be incorporated within an encoder for encoding the data which need segmentation afterwards.

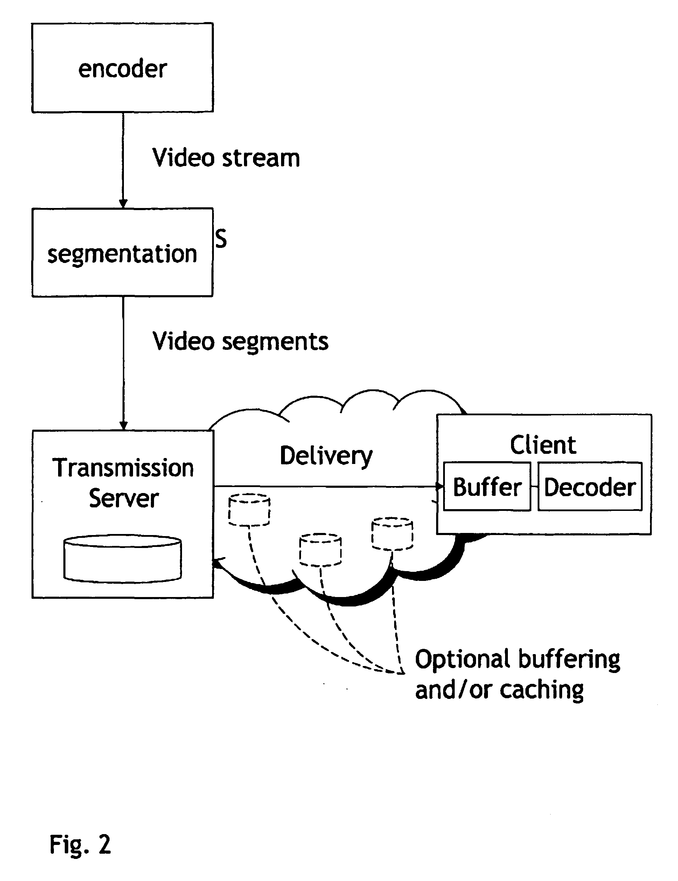

The segmentation method aims to optimize the delivery of the segmented data to a client receiver. Such a configuration can be part of a large transmission network such as shown in Fig. 2 e.g. any fixed or wireless network adapted to transport massive amounts of data. However it can also be applied for segmentation of data to be transmitted within one single device or apparatus, e.g. between two parts of a processor, which then respectively act as transmitter and client receiver. Embodiments of the invention are thus suited for being used with any type of digital data to be transmitted.

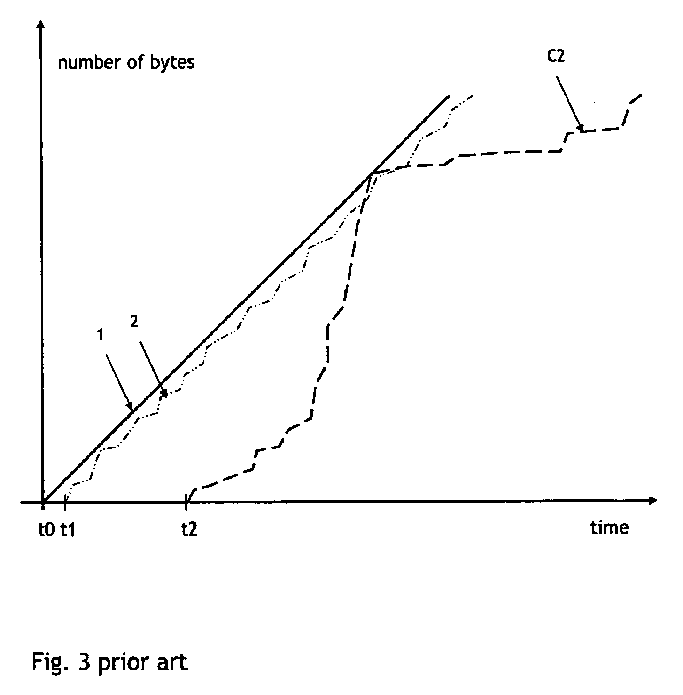

In the transmission network shown in Fig. 2 data generated by a video encoder is to be transmitted over the network. The data thus comprise an encoded video stream, whereby this encoding could be based on constant bit rate or variable bit rate encoding. Prior art solutions comprised transporting the encoded data from a network node such as a transmission server to a remote client receiver using constant bit rate transmission. Fig. 3 thereby shows 3 arrival curves of data at the receiver, being respectively denoted 1, 2 and C2. Such an arrival curve represents the total accumulated or received number of bytes of data received within a certain part of the client receiver as a function of the time. Curve 1 is a straight line, representing a perfect constant bit rate delivery arrival curve of requested data at the input of the buffer of the client receiver. Curve 2 shows the departure of the bytes from this buffer and thus the arrival or the received bytes in the client decoder, at the time when they are needed to decode the video frames for timely display to the user. Curve 2 also represents an arrival deadline for each byte of the data in the decoder as every byte of data should arrive at least before its according deadline. Curve 2 shows this arrival curve for a CBR encoded video. Curve C2 on the same figure shows another arrival curve at the decoder, but this time for VBR encoded video content. It also represents the arrival deadline for each byte of data in the decoder. When comparing curves 2 and C2, curve 2 shows that the CBR encoded and CBR transmitted video can be decoded or used at t1-t0, representing a small delay of e.g. 250 ms, needed to ensure that enough data buffering is available to compensate for the small variation in play out rate, as curve 2 may not surpass curve 1. Curve C2 on the other hand shows that, for VBR encoded video , a much longer buffering time is needed, expressed by the delay t2-t0, to guarantee that this video playout is never "ahead" of the arrival curve 1. This minimum delay t2-t0 is determined by the intersection of curve 1 and C2, ensuring that enough buffering is performed to guarantee an uninterrupted video decoding and consequent play out. It is clear that, when this curve C2 would surpass curve 1, the data requested at the decoder would not timely arrive, resulting in staling video and even temporary frozen images which is highly undesireable.

From this Fig. 3 it is clear that, for variable bit rate encoded video, a variable bit rate transmission scheme would be a better solution from the point of view of quality preservation at the receiver as this kind of transmission would again lead to an arrival curve at the input of the buffer which would resemble the curve C2, which could result in an even smaller time delay, theoretically the time to transport a single frame. At the current standards of 25 frames/second, this would represent a minimum of 40 msec. In practice some larger delays are used, to take into account some margins and some extra buffering which relates to the decoding process and method itself as this might also require information from some previous frames. However this method involves managing the exact timing for each frame which is control-intensive. Moreover overall network delay and jitter can contribute to further larger delay variations, such that constant bit rate transmission is still preferred.

If this constant bit rate transmission is used, prior art solutions try to nevertheless approximate a variable bit rate transmission by first segmenting the variable bit rate encoded data using fixed time interval segments, before being transmitted, while a constant bit rate scheme per segment or interval is assumed or used during transmission. This constant bit rate is variable from interval to interval, and is simply calculated from the segment size, divided by the fixed time interval value, and allows as such to approximate the variable bit rate transmission scheme. To guarantee that a segment can be played without interruption, play out is typically started after receiving the complete segment, because no guarantees are made to maximum time deviations from the CBR transmission. It is evident that these intervals then have to be quite short for enabling small buffer delays.

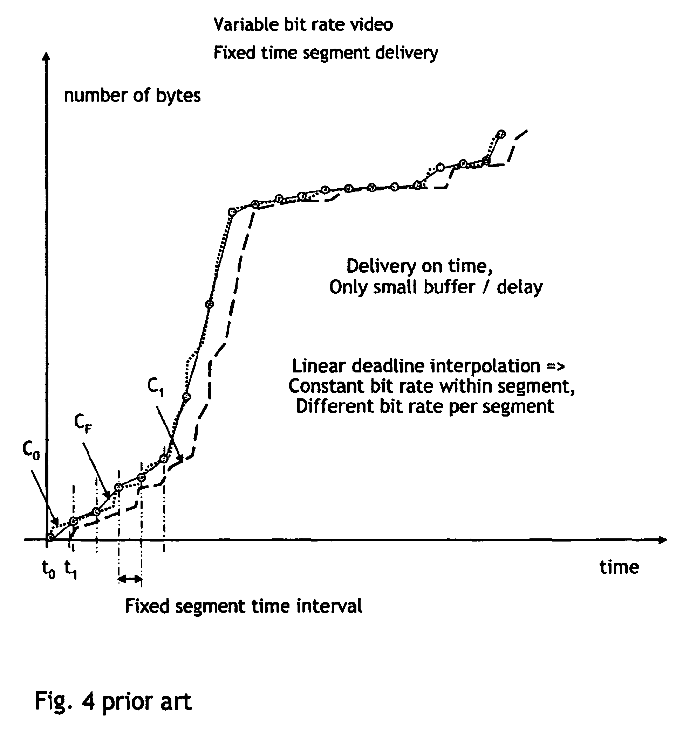

This is illustrated on Fig. 4 showing C1 representing the "ideal" VBR encoded arrival curve at t1 at the decoder in the client receiver. This curve has the shape of curve C2 of Fig. 3, but is shifted to intersect the timing axis at this minimum delay t1. Fig. 4 also shows another shifted curve, denoted curve C0, which represents the cumulative amount of data, usually expressed in bytes, to be transmitted at the transmission server as a function of time. Curve C_{F} then represents the prior art segmented curve, whereby at fixed time intervals the bytes will be transmitted assuming a constant bit rate scheme which thereby approximates the VBR transmission curve if the time intervals are sufficiently small.

A drawback of this prior art method is that it creates a lot of overhead which inherently results from the segmentation as at the onset of each new time interval, thus of each new segment, signalization data has to be provided for informing the network about the calculated bit rate, for informing the network about the start and end byte of each time interval, for enabling session or connection set up at each time interval, etc.

In order to reduce this overhead while still guaranteeing sufficient quality, and thus less delay, as in the ideal VBR transmission case, embodiments of the invention aim at generating these segments at potentially variable intervals, whereby the duration and thus start and stop time of each interval is calculated taking into account one or more client receiver parameters. These client receiver parameters or constraints can for instance be the maximum buffer occupancy at the receiver, or a maximum buffering delay at the receiver.

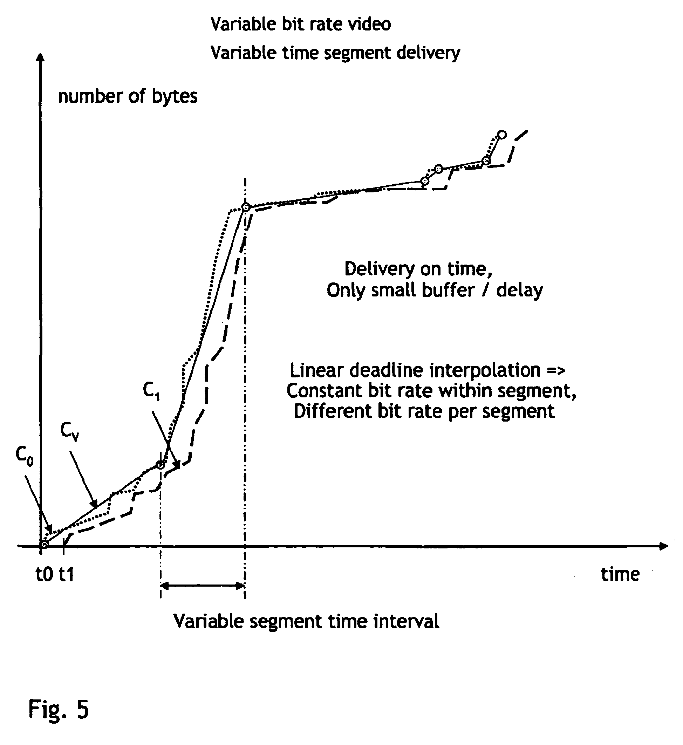

This is schematically shown in fig.5, showing again the same curves C0 and C1 of data as a function of time, and a segmented curve Cv for approximating C0, but this time segmented according to non-fixed segments, which are merely determined from this curve C0 and from these client parameters. These client parameters can be a general, or client-specific maximum buffer occupancy parameter, or a general or client-specific maximum buffering delay parameter, such as this delay t1-t0 shown on the previous figures 3, 4 and on this figure 5. As previously mentioned this parameter can range between the time to buffer one frame, typically being 40 msec using current standards, to some larger values to 1 or even 10 seconds. But a typical practical value can be e.g. 250 msec. As already mentioned for the transmission of the segmented data over the network a constant bit rate delivery transmission can be used or assumed or a deadline based scheduling using the approximated constant bit rate arrival as the deadline can be used.

A simple, though computing intensive algorithm to determine the individual segments comprises adding frame per frame to a particular segment while checking that the maximum deviation from the average segment bit rate does not exceed the client parameters, being this maximum buffer occupancy or maximum buffering delay.

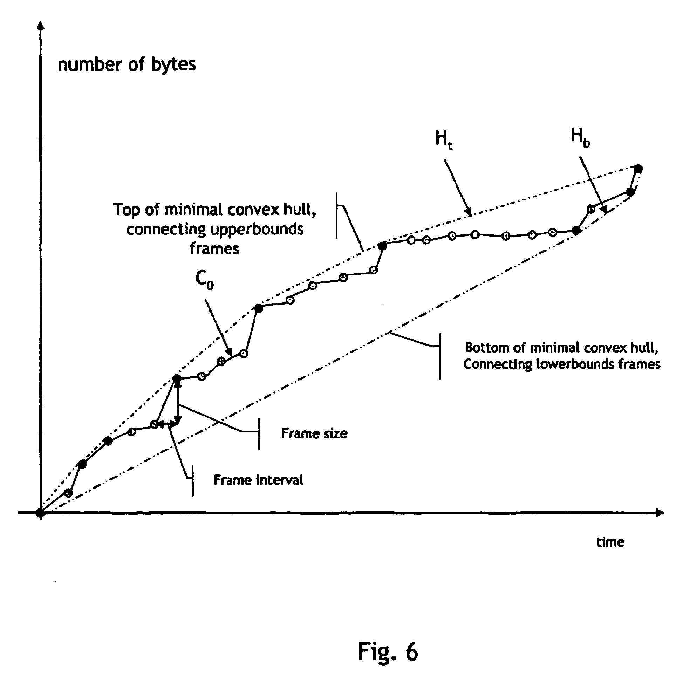

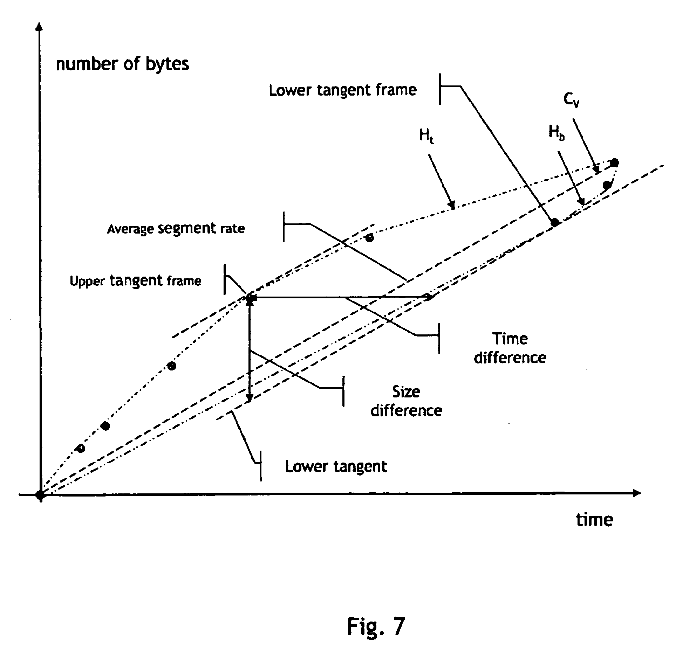

Fig. 6 shows another possible implementation for the calculation of the segments. This method is less computational intensive compared to the previously mentioned. This variant continuously calculates the frame coordinates from the minimal convex hull of the curve C0, and keeps them in a list for the top and the bottom part of the hull. For every frame in one of the 2 lists also the rate to the previous frame in that list is kept. After adding a new frame to the segment, the average bit rate is calculated, and both lists are scanned for the frame which is the tangent frame. For the upper bound of the convex hull this frame has a rate to the previous frame which is bigger or equal than the average frame rate and a rate to the next frame which is smaller or equal. For the lower bound of the convex hull this frame has a rate to the previous frame which is smaller or equal than the average frame rate and a rate to the next frame which is bigger or equal. Once the 2 tangent frames are found, the 2 tangents themselves are defined using the average segment bit rate. The distance between the 2 tangents form the maximum time difference (or buffering delay) in the x (time) coordinate, and the maximum buffer occupancy in the y (number of bytes) coordinate. When, during the calculation of these numbers the maximum buffer occupancy size or maximum buffering delay is exceeded, the point before the last added point to the present segment will be taken as the end point of the present segment, and which will automatically correspond to the starting point of the next segment. This procedure is then further repeated on the next part of the curve, etc... Packets within each of these segments can then be transmitted using a constant bit rate scheme within the segment, determined by the start and the end points of the segments. This is further clarified in fig. 7 showing the top convex hull Ht and the bottom convex hull Hb for one segment, being part of the curve Cv, while the original data points of the curve C0 are the indicated points, which are either comprised in the top or bottom convex hull.

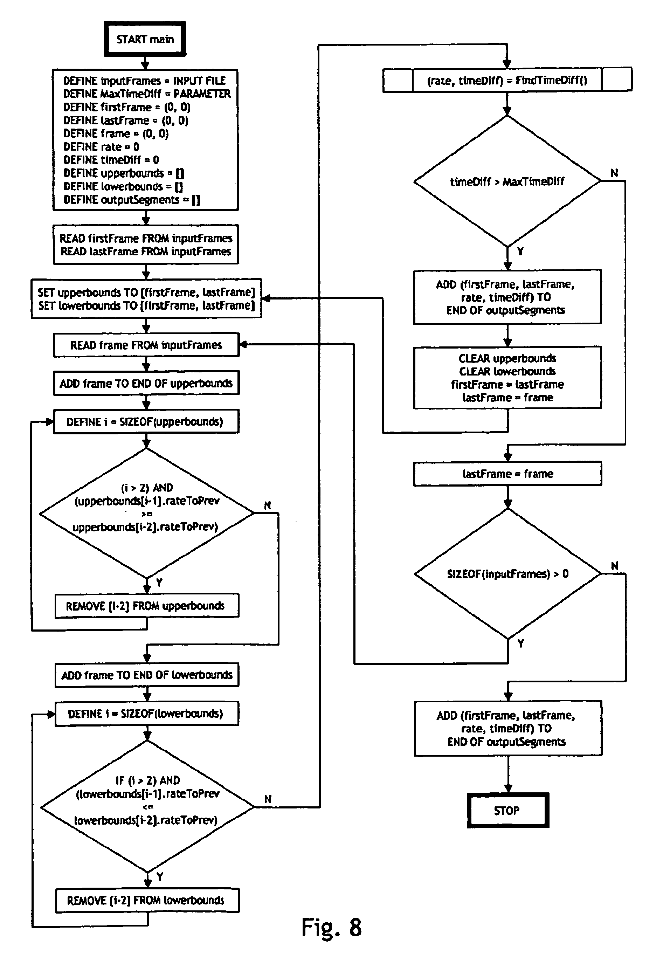

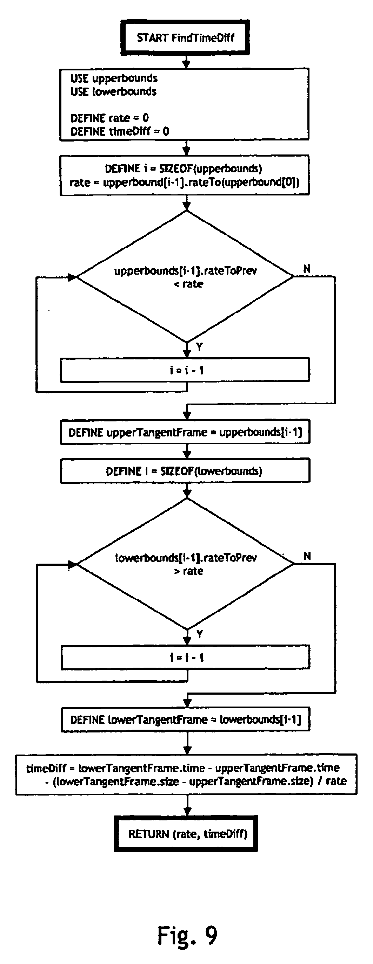

A possible implementation is shown in the flowcharts displayed in Figs. 8 and 9.

Fig. 8 shows the main procedure to handle a serie of frames coming from an input file inputFrames, and to generate a serie of segments stored in a list outputSegments. This embodiment has one parameter: MaxTimeDiff to steer the segmentation. The parameter MaxTimeDiff defines the maximum time difference between the delivery of a frame according to the calculated delivery rate and the actual consummation time by a decoder within the receiver to render the frame image on time to the display.
- The input data being cumulative number of frame bits as a function of time can be represented by means of a data structure that contains 2 fields: first the cumulative frame time , denoted Fi.time being the time that the frame must be available for the decoder, and second the frame size, denoted Fi.size representing the cumulative number of bytes displayed so far. Time is relative to an arbitrary reference time, which is constant for a continuous playout of the video. Size is relative to an arbitrary starting position of continuous video frames. The frame size field equals the sum of the number of bytes of each previous frame and optionally a constant/offset. The frame time field equals the sum of each previous frame time interval and optionally a constant/offset.
- A frame datastructure can calculate the rate to an other frame, as follows: (F2.size - F1.size)/(F2.time - F1.time).
- Coming from the inputframes file, the frame values are copied to 2 ordered list objects: upperbounds and lowerbounds. These lists can be indexed with an integer ranging from 0 for the first element until sizeof(list) - 1. The upperbounds list contains all the points that define the top of the minimal convex hull, the lowerbounds define the bottom of the minimal convex hull (see Fig 6). The lists are build by adding the newly read framevalues to the end of the list. Then the rate to the previous point (= list[i-1].rateToPrev) is calculated and compared with the rate between the previous point and the one preceding the previous point(= list[i-2].rateToPrev). If for the upperbound the upperbounds[i-2].rateToPrev rate is smaller or equal than the upperbounds[i-1].rateToPrev rate, then the upperbounds[i-2] element is deleted. If for the lowerbound the lowerbounds[i-2].rateToPrev rate is larger or equal than the lowerbounds[i-1].rateToPrev rate, then the lowerbounds[i-2] element is deleted. As a result, all concave elements are removed from the lists.

- After the addition of each new frame to the bounds lists, the maximum time difference between the upperbound and the lowerbound is calculated as shown in Fig.9 . This is done by first finding a constant bit rate that should be used to deliver the content. In this embodiment this is achieved by calculating the average bit rate for the full segment. Then both the top and bottom minimal convex hulls are iterated to find the frame on the convex curve that touches the tangent line with the same angle as the delivery rate. Using these points the maximum time difference is calculated as the horizontal difference between the 2 tangent lines. This time difference is the initial time that must be waited, after receiving initial content in that segment with a constant bit rate, before playout can start, to guarantee that the content will not be delivered too late. In a similar manner the vertical size difference will give the maximum buffer required.
- Both the time and size difference of a segment can be used to decide if the segment should stop before the last added frame. If the new frame exceeds the required maximum threshold, then the segment stops before this frame, and a new segment is initialized.
- If the last frame does not exceed the maximum threshold for the last segment, then the segment must be added before ending the procedure.

While the principles of the invention have been described above in connection with specific apparatus, it is to be clearly understood that this description is made only by way of example and not as a limitation on the scope of the invention, as defined in the appended claims.

## Claims

1. Method for segmentation of data for being transmitted over a network between a transmitter and a client receiver, said method including a step of dividing the data to be transmitted into segments
**characterized in that** said segments are further determined by a piecewise linear approximation of a curve (CO) representing a cumulative number of bytes of data to be transmitted as a function of transmission time such that per segment at least one client parameter constraint is met.

2. Method according to claim 1 wherein said at least one client parameter is a fixed parameter for all client receivers coupled to said transmitter.

3. Method according to claim 1 or 2 wherein said at least one client parameter is related to a maximum receiver buffer occupancy parameter of said client receiver.

4. Method according to claim 1 or 2 wherein said at least one client parameter is related to a maximum buffering delay parameter at said client receiver.

5. Method according to claim 1 wherein said segments are determined by fitting the curve (CO) representing the cumulative number of bytes of data to be transmitted as a function of transmission time with the convex hull.

6. Segmentation device (S) adapted to perform segmentation of data for being transmitted over a network between a transmitter and a client receiver, said segmentation device (S) being adapted to divide the data to be transmitted into segments
**characterized in that** said segmentation device (S) is adapted to determine said segments by a piecewise linear approximation of a curve (CO) representing a cumulative number of bytes of data to be transmitted as a function of transmission time such that per segment at least one client parameter constraint is met.

7. Segmentation device (S) according to claim 6 further being adapted to determine said segments based on at least one fixed parameter which is the same for all client receivers coupled to said transmitter.

8. Segmentation device (S) according to claim 6 or 7 wherein said at least one client parameter is related to a maximum receiver buffer occupancy parameter of said client receiver.

9. Segmentation device (S) according to claim 6 or 7 wherein said at least one client parameter is related to a maximum buffering delay parameter at said client receiver.

10. Segmentation device (S) according to claim 1 further being adapted to determine said segments by fitting the curve (CO) representing the cumulative number of bytes of data to be transmitted as a function of transmission time with the convex hull.

11. Encoder comprising a segmentation device (S) according to any of the previous claims 6-10.

12. Transmitter comprising a segmentation device (S) according to any of the previous claims 6-10.

13. Network node of a telecommunications network comprising a segmentation device (S) according to any of the previous claims 6-10.

## Patentansprüche

1. Verfahren zur Segmentierung von Daten, die dafür bestimmt sind, über ein Netzwerk zwischen einem Sender und einem Client-Empfänger übertragen zu werden, wobei das besagte Verfahren einen Schritt des Aufteilens der zu übertragenden Daten in Segmente umfasst,
**dadurch gekennzeichnet, dass** die besagten Segmente weiterhin durch eine stückweise lineare Annäherung einer Kurve (C0), welche eine kumulative Anzahl von Bytes von zu übertragenden Daten in Abhängigkeit von der Übertragungszeit darstellt, derart bestimmt werden, dass pro Segment mindestens eine Client-Parameterbeschränkung erfüllt wird.

2. Verfahren nach Anspruch 1, wobei der besagte mindestens eine Client-Parameter ein fester Parameter für alle an den besagten Sender gekoppelten Client-Empfänger ist.

3. Verfahren nach Anspruch 1 oder 2, wobei sich der besagte mindestens eine Client-Parameter auf einen Parameter für die maximale Belegung des Empfangspuffers des besagten Client-Empfängers bezieht.

4. Verfahren nach Anspruch 1 oder 2, wobei sich der besagte mindestens eine Client-Parameter auf einen Parameter für die maximale Pufferverzögerung an dem besagten Client-Empfänger bezieht.

5. Verfahren nach Anspruch 1, wobei die besagten Segmente durch Anpassen der Kurve (C0), welche die kumulative Anzahl von Bytes der zu übertragenden Daten in Abhängigkeit von der Übertragungszeit darstellt, an die konvexe Hülle bestimmt werden.

6. Segmentierungsvorrichtung (S), ausgelegt für das Durchführen einer Segmentierung von Daten für die Übertragung über ein Netzwerk zwischen einem Sender und einem Client-Empfänger, wobei die besagte Segmentierungsvorrichtung (S) dazu ausgelegt ist, die zu übertragenden Daten in Segmente aufzuteilen,
**dadurch gekennzeichnet, dass** die besagte Segmentierungsvorrichtung (S) dazu ausgelegt ist, die besagten Segmente durch eine stückweise lineare Annäherung einer Kurve (C0), welche eine kumulative Anzahl von Bytes der zu übertragenden Daten in Abhängigkeit von der Übertragungszeit darstellt, derart zu bestimmen, dass pro Segment mindestens eine Client-Parameterbeschränkung erfüllt wird.

7. Segmentierungsvorrichtung (S) nach Anspruch 6, weiterhin dazu ausgelegt, die besagten Segmente auf der Basis mindestens eines festen Parameters, welcher für alle an den besagten Sender gekoppelten Client-Empfänger derselbe ist, zu bestimmen.

8. Segmentierungsvorrichtung (S) nach Anspruch 6 oder 7, wobei sich der besagte mindestens eine Client-Parameter auf einen Parameter für die maximale Belegung des Empfangspuffers des besagten Client-Empfängers bezieht.

9. Segmentierungsvorrichtung (S) nach Anspruch 6 oder 7, wobei sich der besagte mindestens eine Client-Parameter auf einen Parameter für die maximale Pufferverzögerung an dem besagten Client-Empfänger bezieht.

10. Segmentierungsvorrichtung (S) nach Anspruch 1, weiterhin dazu ausgelegt, die besagten Segmente durch Anpassen der Kurve (C0), welche die kumulative Anzahl von Bytes der zu übertragenden Daten in Abhängigkeit von der Übertragungszeit darstellt, an die konvexe Hülle zu bestimmen.

11. Codierer mit einer Segmentierungsvorrichtung (S) gemäß einem beliebigen der vorstehenden Ansprüche 6-10.

12. Sender mit einer Segmentierungsvorrichtung (S) gemäß einem beliebigen der vorstehenden Ansprüche 6-10.

13. Netzwerkknoten eines Telekommunikationsnetzwerks mit einer Segmentierungsvorrichtung (S) gemäß einem beliebigen der vorstehenden Ansprüche 6-10.

## Revendications

1. Procédé de segmentation de données à transmettre sur un réseau entre un émetteur et un récepteur client, ledit procédé comprenant une étape de division des données à transmettre en segments
**caractérisé en ce que** lesdits segments sont en outre déterminés par une approximation linéaire segmentée d'une courbe (CO) représentant un nombre cumulatif d'octets de données à transmettre en fonction du temps de transmission de sorte qu'au moins une contrainte de paramètre client soit satisfaite par segment.

2. Procédé selon la revendication 1, dans lequel ledit au moins un paramètre client est un paramètre fixe pour tous les récepteurs client couplés audit émetteur.

3. Procédé selon la revendication 1 ou 2, dans lequel ledit au moins un paramètre client est associé à un paramètre d'occupation maximum du tampon de récepteur dudit récepteur client.

4. Procédé selon la revendication 1 ou 2, dans lequel ledit au moins un paramètre client est associé à un paramètre de retard maximum de mise en tampon au niveau dudit récepteur client.

5. Procédé selon la revendication 1, dans lequel lesdits segments sont déterminés en adaptant la courbe (CO) représentant le nombre cumulatif d'octets de données à transmettre en fonction du temps de transmission avec l'enveloppe convexe.

6. Dispositif de segmentation (S) adapté pour effectuer la segmentation des données à transmettre sur un réseau entre un émetteur et un récepteur client, ledit dispositif de segmentation (S) étant adapté pour diviser les données à transmettre en segments
**caractérisé en ce que** ledit dispositif de segmentation (S) est adapté pour déterminer lesdits segments par une approximation linéaire segmentée d'une courbe (CO) représentant un nombre cumulatif d'octets de données à transmettre en fonction du temps de transmission de sorte qu'au moins une contrainte de paramètre client soit satisfaite par segment.

7. Dispositif de segmentation (S) selon la revendication 6, adapté en outre pour déterminer lesdits segments en se basant sur au moins un paramètre fixe qui est identique pour tous les récepteurs client couplés audit émetteur.

8. Dispositif de segmentation (S) selon la revendication 6 ou 7, dans lequel ledit au moins un paramètre client est associé à un paramètre d'occupation maximum de tampon de récepteur dudit récepteur client.

9. Dispositif de segmentation (S) selon la revendication 6 ou 7, dans lequel ledit au moins un paramètre client est associé à un paramètre de retard maximum de mise en tampon au niveau dudit récepteur client.

10. Dispositif de segmentation (S) selon la revendication 1, adapté en outre pour déterminer lesdits segments en adaptant la courbe (CO) représentant le nombre cumulatif d'octets de données à transmettre en fonction du temps de transmission avec l'enveloppe convexe.

11. Codeur comprenant un dispositif de segmentation (S) selon l'une quelconque des revendications 6-10.

12. Emetteur comprenant un dispositif de segmentation (S) selon l'une quelconque des revendications 6-10.

13. Noeud de réseau d'un réseau de télécommunications comprenant un dispositif de segmentation (S) selon l'une quelconque des revendications 6-10.
